# EUROPEAN PATENT SPECIFICATION

(11) **EP 3 656 928 B1**
(45) Date of publication and mention of the grant of the patent: **07.06.2023**
(21) Application number: 19468002.1
(22) Date of filing: 25.11.2019
(51) Int. Cl.: E02F 3/36, B66C 3/16, E02F 3/413, A01G 23/00, B66C 3/00

(54) **MULTI-PURPOSE MODULAR HYDRAULIC GRIPPER WITH SYNCHRONOUS AND ASYNCHRONOUS OPERATION**
MULTIFUNKTIONELLER HYDRAULISCHER GREIFER MIT SYNCHRONISIERTEM UND NICHT-SYNCHRONISIERTEM BETRIEB
GRAPPIN HYDRAULIQUE MULTIFONCTIONEL AVEC OPÉRATION SYNCHRONISÉE ET NON-SYNCHRONISÉE

(30) Priority: 23.11.2018 SI 201800254
(43) Date of publication of application: 27.05.2020
(73) Proprietor: Voje, Rafko, 1270 Litija (SI)
(72) Inventor: Voje, Rafko, 1270 Litija (SI)
(74) Representative: Djukic, Dusan

(56) References cited:
- KR-A- 20110 105 503
- US-A- 3 413 029

## Description

### Field of the invention

The invention belongs to the field of hydraulic grippers used for the manipulation of various objects, such as tree trunks and rocks, as well as bulk materials, for felling trees, cutting trees and branches, clearing forests, excavating, loading, cutting and the like.

### State of the art

The hydraulic grippers currently on the market allow only the synchronous movement of the arms, which is not optimal for manipulating objects of irregular or asymmetric shapes. In such cases, there is an inadequate gripping of the object, increased burdening of the gripper in some spots and less control of the object during manipulation. Very often, the grippers have also a relatively exposed hydraulic system, which can lead to damage during operation and the leakage of hydraulic oil into the working environment. As a rule, the grippers on the market are only intended for one area of application, which can be a huge financial burden for the user in cases where different works are performed with many machines.

Working machines, such as excavators, tractors, trucks and the like, used for manipulation of larger objects such as tree trunks and rocks, as well as bulk materials, for tree felling, forest clearing, excavation, loading, cutting and similarly have a working arm to which a hydraulic gripper is attached.

Hydraulic grippers according to the state of the art allow only the synchronous movement of the gripping arms, which causes difficulties in manipulating objects of irregular and/or asymmetric shapes. In such cases, the gripping of the object is inadequate, resulting in increased burdening of the gripper in some spots and less control over the object during manipulation, which may result in the object falling from the gripper.

The hydraulic actuator of the gripper according to the state of the art is open and therefore exposed to the environment, which can lead to unintentional or deliberate damage and consequent breakdown of the hydraulic system, leakage of hydraulic oil into the working environment, malfunctioning, etc.

As a rule, the grippers according to the state of the art are intended for only one area of application, which is a problem when we have to perform different working operations on one site with one machine.

The gripper arms according to the state of the art will be worn out in the area where they grip the objects, become sharp and therefore damage the manipulated objects.

The gripper arms according to the state of art are also not adapted to the manipulation of objects of a particular shape, such as metal profiles, rails, and the like.

Document US5558380A ,serving as the basis for the preamble of claim 1, describes a two-cylinder gripper in which the cylinders are fixed on one side to the axis of the arm and on the other to the arm off-center. Between them, there is a system with a hydraulic oil flow divider that ensures synchronous operation. The disadvantage of this system is that it allows only synchronous operation, which proves to be a disadvantage when dealing with asymmetric objects. The center of gravity of such objects is not aligned with the axis of the working machine arm, which may result in inadequate grip and/or difficulty in displacing the object. Another disadvantage of this system is that it does not allow the closed realization of hydraulic actuator housing, causing the hydraulic cylinders and hydraulic system to be exposed to dirt and damage. The disadvantage of this system is also the flow divider that does not work at high loads, as well as the fact that changing of arms is impossible.

In documents US2002/0158479A1 and US2005/0158186A1, the technical problem of hydraulic actuator exposure is solved by being enclosed in a two-piece housing. The aforementioned documents also modify the realization of the grip in such a way that the force on the arm does not act over the crank on the arm but the arm is mounted on an axis controlled by a hydraulic actuator mechanism, namely two hydraulic rotary motors acting on the system of screw/nut.

It is possible to change arms, but in a way that does not allow heavy loadings and it is practically impossible to change arms in the field.

A further disadvantage of the described technical solutions is that the system does not allow the large gripping forces required, for example, for wood shears, as well as that the system allows only synchronous operation.

Document DE102004028600A1 presents a method of clamping two different arms to the same gripper, whereby the gripper can be used for several purposes. The problem with this technical solution is that it is not universal, does not allow closed hydraulic actuator housing and that, after prolonged operation at the point of fixation of the arms, the clearance may appear.

### Description of the technical problem

A technical problem solved by the present invention is a multi-purpose modular hydraulic gripper that allows synchronous and asynchronous movement of the arms, allowing manipulation of objects of irregular or asymmetric shapes.

A further technical problem solved by the present invention is the hydraulic actuator of the hydraulic gripper, which is protected from external influences and is enclosed in a rigid housing.

A further technical problem solved by the present invention is a multi-purpose modular hydraulic gripper that makes it easy to change arms on the site and is multi-purpose.

A further technical problem solved by the present invention is the special implementation of arms that, even after prolonged use, do not damage the object being manipulated and/or are adapted to manipulate objects of a certain shape, such as metal profiles, rails and the like.

A further technical problem solved by the present invention is the special implementation of arms that have fixed blades that can cut tree trunks, branches and the like.

### Description of the invention

The objective technical problems are solved by the gripper defined in independent claim 1 with preferred embodiments defined in dependent claims 2 - 10 by introducing a gripper that enables synchronous and asynchronous operation, and with the hydraulic actuator designed to be enclosed in a rigid housing, thus minimizing the possibility of damage to hydraulic cylinders and pipes and oil spillage into the working environment. The rigid housing reduces the load on mechanical parts by external forces and increases the reliability of the device.

Synchronous and asynchronous gripping modes allow the optimal gripping of any object and better control during manipulation of the said object.

The system of clamping the arms on the axle enables quick and easy change of arms also at the site of operation.

### Short description of the figures

In the continuation, the invention will be described in detail and presented with the accompanying figures which show:
- Figure 1:: basic embodiment of the multi-purpose hydraulic gripper in the assembled state
- Figure 2:: basic embodiment of the multi-purpose hydraulic gripper in the disassembled state
- Figure 3A:: hydraulic actuator, top, front, left side view in the disassembled state
- Figure 3B:: hydraulic actuator housing in partial cross-section
- Figure 4:: internal elements of the hydraulic actuator in the disassembled state
- Figure 5A:: universal gripping arm
- Figure 5B:: clamping handle
- Figure 6A:: clamping of the gripping arm - 1st step
- Figure 6B:: clamping of the gripping arm - 2nd step
- Figure 7:: hydraulic diagram of the hydraulic actuator
- Figure 8A:: universal gripping arm shown in Figure 5A - side view
- Figure 8B:: universal gripping arm shown in Figure 5A - ground plan
- Figure 9A:: right gripping arm with the prongs
- Figure 9B:: left gripping arm with the prongs
- Figure 10:: gripping arm for bulk material
- Figure 11:: gripper with scissors
- Figure 12:: geometry of blades and scissors
- Figure 13A:: gripper with scissors in open state
- Figure 13B:: gripper with scissors in closed state.

### Detailed description of the invention

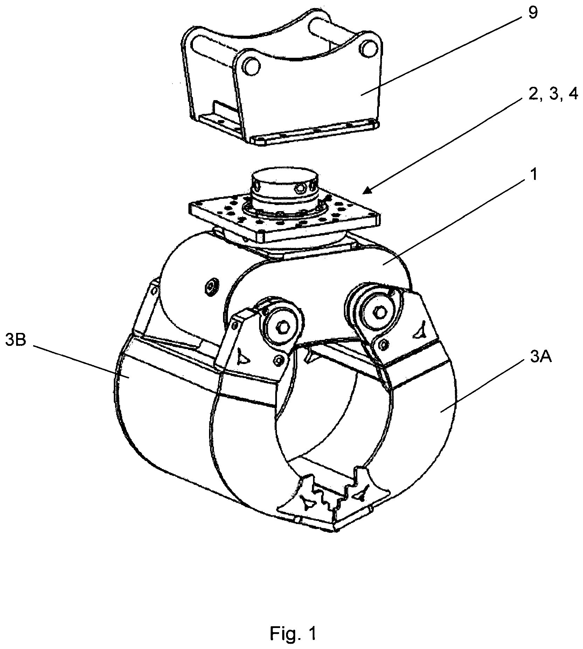

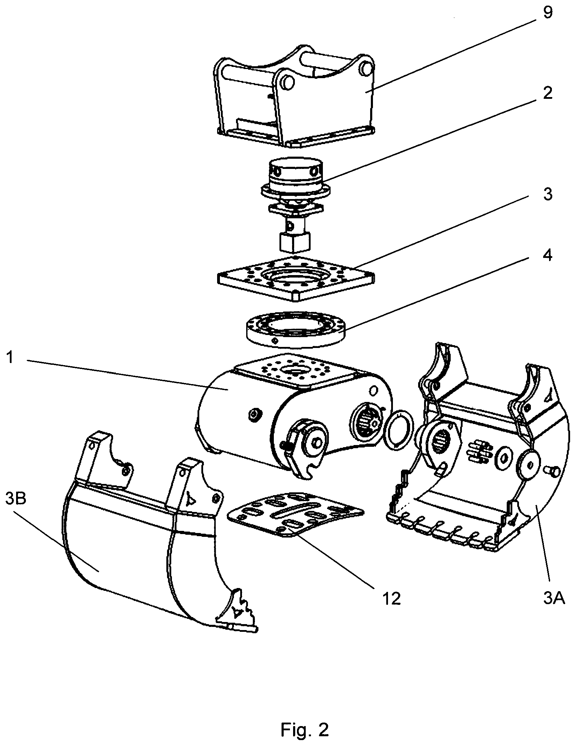

The basic realization of multi-purpose hydraulic gripper is shown in Figures 1 and 2. The gripper consists of a hydraulic actuator 1 with a mounting opening at the bottom side, closed by a housing cover 12, of a hydraulic motor and rotator assembly 2, an adjustment plate 3 and a bearing 4, and two gripping arms 3A, 3B, which are identical or different, depending on intended function.

The gripper is connected to the working machine by a connection plate 9 which is clamped to the working arm of the working machine, such as an excavator, tractor, log truck and the like.

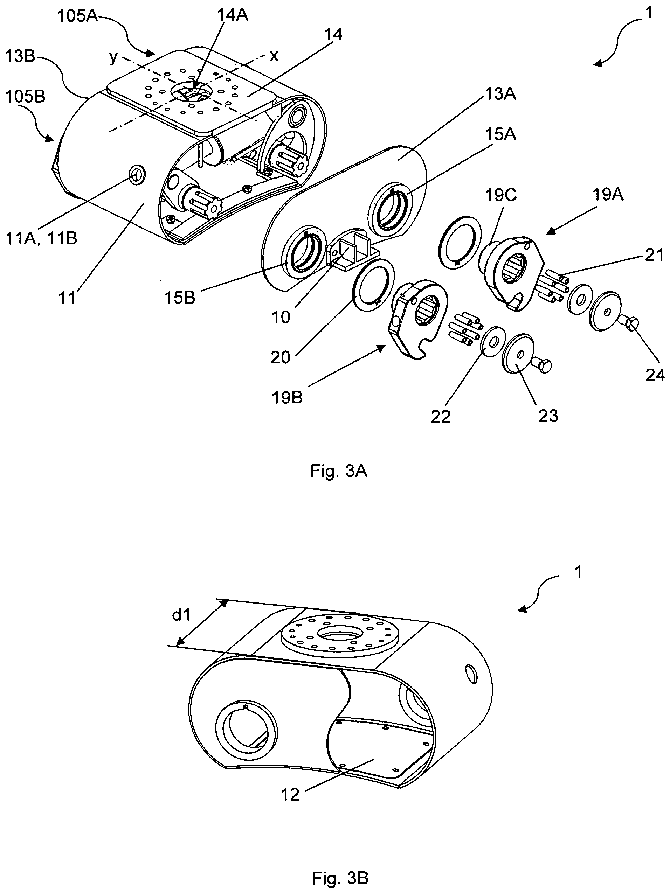

Figure 3A shows hydraulic actuator 1 in disassembled state, namely from the top, front, left side.

Hydraulic actuator 1 consists of a box housing 11 which is at the bottom closed by the housing cover 12 and the side walls of the housing are curved. In the curved side walls of the housing there are lubrication openings 11A which are closed by the plug 11B. On the upper side of the housing 11 is a connection plate 14 of the housing, which can be round or square, with a central through opening 14A serving as an entrance for the hydraulic system supply pipes and a multitude of circularly arranged mounting holes.

The housing 11 is across the x-axis and the y-axis substantially symmetrical. In the front wall 13A, the housing 11 there are two openings 15A, 15B and in the rear wall 13B of the housing 11 there are two openings 105A, 105B which are dimensionally identical to the openings 15A, 15B and are arranged in pairs coaxial with them so that the opening 15A is coaxial with opening 105A, and opening 15B is coaxial with opening 105B.

In one version of the gripping device according to the present invention, there is an abutment 10 at the lower edge of the outside of the front wall 13A of the housing 11, at the same distance from the openings 15A, 15B (Figure 3A).

The described housing 11 is welded and essentially one-piece. The only removable part of the housing 11 is the cover 12 which closes the mounting opening on the underside and is screwed onto the housing 11 so that the housing is completely closed and substantially more rigid than in the prior art. The housing 11 of the hydraulic actuator 1 of the present invention is shown in partial cross-section in Figure 3B, which also shows the distance d1, between the outer surfaces of the front and rear walls 13A, 13B. The housing 11 of the hydraulic actuator 1 of the present invention is shown in partial cross-section in Figure 3B, which also shows the distance d1, between the outer surfaces of the front and rear walls 13A, 13B.

In the described housing 11 there is a hydraulic part of the gripper actuator according to the present invention, characterized in that the hydraulic cylinders 16A, 16B are arranged horizontally, which makes the hydraulic actuator of the gripper smaller and more compact.

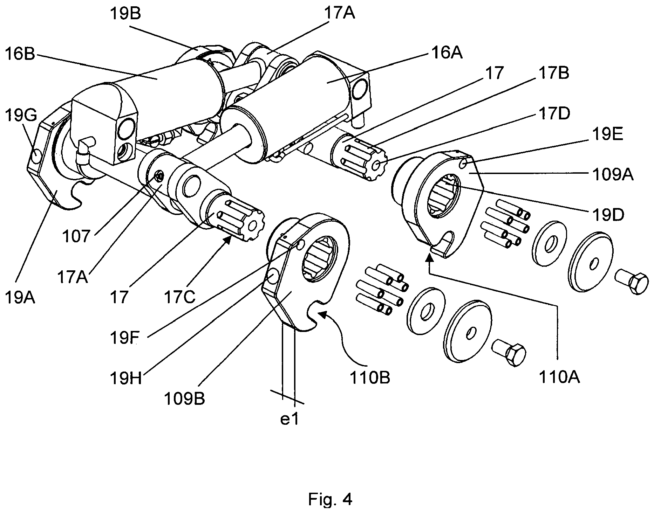

As shown in Figure 4, two identical hydraulic cylinders 16A, 16B are arranged parallel to each other and are facing in the opposite direction. Each hydraulic cylinder 16A, 16B is movably mounted on one side to the housing 11 and on the other to the crank 17A on the corresponding crankshaft 17 (hereinafter referred to as "the shaft(s) (17,17)") A lubricator 107 is provided at the junction crank 17A of the crankshaft 17 and the piston rod of the cylinder 16A, 16B for lubricating the said joint.

Both shafts 17 are parallel to each other clamped in the housing 11 and pivoted in the front and rear walls 13A, 13B in the bearings in the coaxial openings 15A, 105A and 15B, 105B respectively.

The next feature of the hydraulic part of the gripper actuator according to the present invention is that the transfer of force from the hydraulic cylinders to the arms of gripper is carried out through the shaft 17 and the clamping cranks 19A, 19B, rather than through the eccentric clamping on the arm, which improves the transmission of forces and reduces deformations.

In assembled state, two projections 17B of the shaft 17 project from the housing 11 on the front and rear. The said projections 17B of the shaft 17 are made with semicircular grooves 17C, which are evenly spaced around their circumference, and in the front surface of each projection there is a threaded opening 17D which is in alignment with the axis of said projection.

A corresponding clamping crank19A, 19B is mounted on each projection 17B of shaft 17, as shown for example in Figures 3 and 4.

The clamping crank 19A, 19B has a sleeve 19C on the side facing the housing 11, through which a groove opening is provided, having semicircular grooves 19D at the circumference, which in shape and arrangement correspond to the grooves 17C on the projections 17B of the shaft 17.

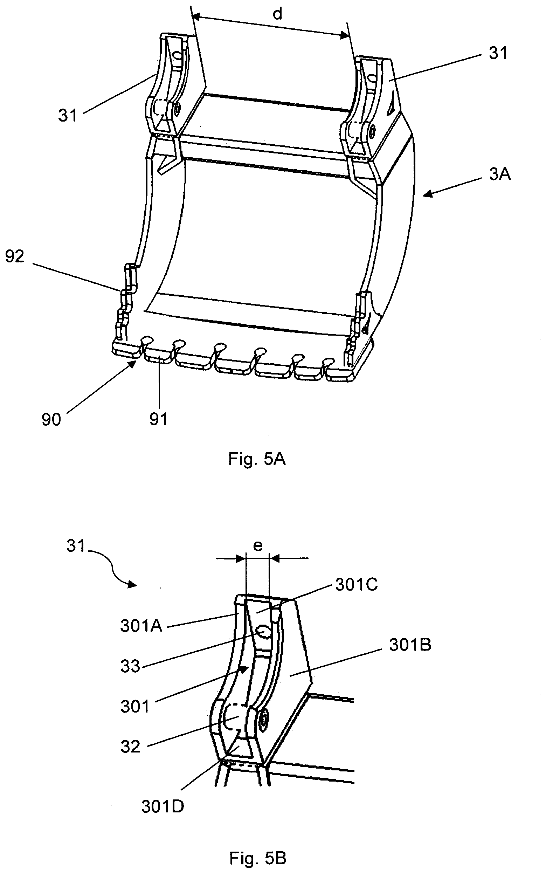

The clamping crank 19A, 19B is formed on the side facing away from the housing 11 in the form of an irregular flange 109A, 109B, with a thickness of e1 which has on the front a threaded opening 19E, 19F for a lubricator (not shown) whose axis is parallel to the axis grooves, and at the circumference of said flange there is an opening 19G, 19H for fixing the gripping arm. The said flange 109A, 109B has at the lower part a clamping groove 110A, 110B for holding the bolt 32 of the gripping arm 3A, 3B (Figure 5).

As can be seen in the accompanying figures, the clamping cranks 19A and 19B are mirror images of each other.

In the assembled state, the sleeve 19C of the clamping cranks 19A, 19B passes through at least one washer 20 and further into the corresponding opening 15A, 15B, 105A, 105B of the housing 11, where it is rotatably inserted. The said sleeve 19C with a grooved opening engages to the projection 17B of the shaft 17, wherein the semicircular grooves 17C of the projection 17B and the semicircular grooves 19D of the grooved opening of the clamping crank 19A, 19B are aligned so that each pair of semicircular grooves 17C and 19D forms a circular opening. In a preferred embodiment of the present invention shown in the accompanying drawings, there are 7 thus formed circular openings.

Conical pins 21 are inserted into the said circular openings, which ensures the transfer of force from the shaft 17 to the clamping cranks 19A, 19B.

The unwanted falling out of the conical pins 21 is prevented by an elastic washer 22 and a cover 23 which are fixed by a screw 24 screwed into the threaded opening 17D of the projection 17B of the shaft 17.

The said clamping cranks 19A, 19B are designed to allow changing of the arms directly in the field where the gripper is used.

The hydraulic actuator described can be made in different sizes, depending on the working machine that will use it.

Figure 5A shows an embodiment of a universal gripping arm 3A having, in the upper part, a pair of clamping handles 31 at a distance d which is greater than the distance d1 between the outer faces of the front and rear walls 13A, 13B, of the housing 11.

As shown in figure 5B, the handle 31 has a clamping cavity 301 having a width e that is at sides bounded by parallel side walls 301A, 301B of uniform and constant thickness, and at the back by a back wall 301C which is perpendicular to the said side wall 301A. 301B, having a substantially uniform thickness in the upper part, and in the lower part obliquely slopes into the bottom 301D of the cavity 301. A transverse clamping bolt 32 is mounted between the side walls 301A, 301B. In the upper part of the rear wall 301C is a threaded opening 33.

The width e of the clamping cavity 301 is greater than the thickness e1 of the flange 109A, 109B of the clamping arm 19A, 19B.

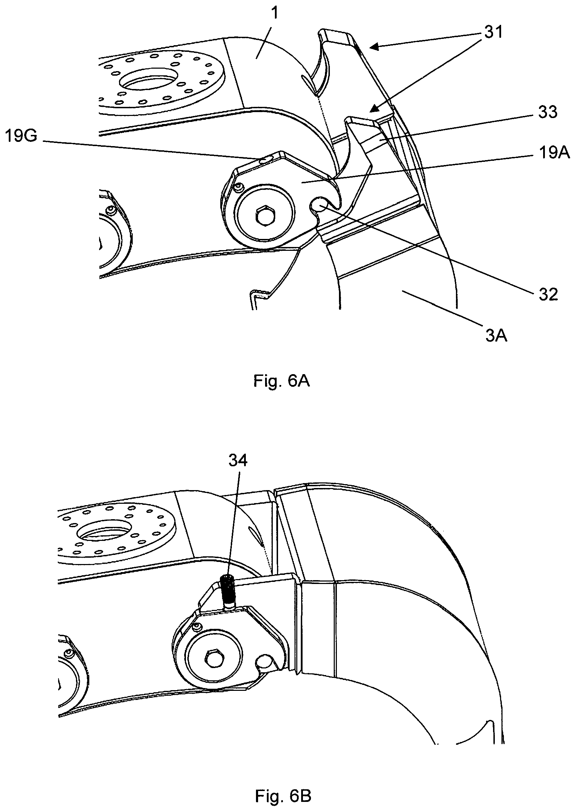

Figures 6A and 6B show the clamping handle of the gripping arm 3A in partial cross-section.

The first step of clamping the right gripping arm 3A is shown in Figure 6A. Using a corresponding hydraulic cylinder 16A, 16B and crank 17A, we rotate the shaft 17 in a counter-clockwise direction (viewed from the front side) by placing the clamping grooves 110A, 110B of the clamping cranks 19A, 19B in the most open position. Then we approximate the housing with hydraulic actuator to the upper part of the gripper 3A by inserting the clamping grooves 110A, 110B of the clamping cranks 19A, 19B into the clamping handles 31 and slipping them onto the clamping bolts 32 of the gripping arm 3 A.

The second step of the clamping of the right gripping arm 3A is shown schematically in Figure 6B. We rotate the shaft 17 and thus the clamping cranks 19A, 19B clockwise so that the threaded openings 33 on the clamping handles align with the openings 19G and 19H respectively on the clamping crank 19A, 19B.

Into the threaded opening 33, we screw the threaded pin 34 which is conical at the end to fit into the opening 19G and 19H respectively on the clamping crank19A, 19B.

The process of clamping the left gripping arm 3B is analogous.

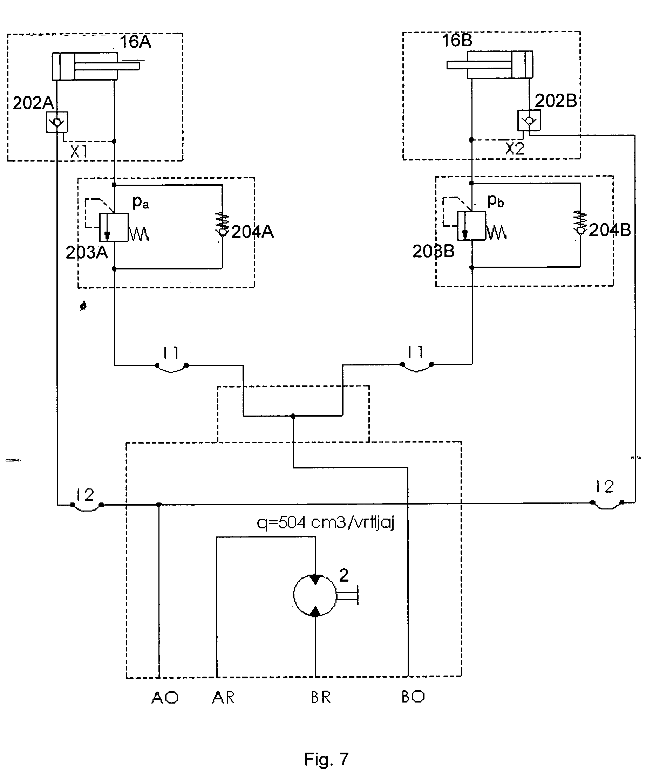

In the said housing 11 there is also a control part of the hydraulic actuator configured so that the hydraulic actuator operates according to the hydraulic scheme shown in Figure 7 and enables synchronous and/or asynchronous operation of the gripper, which will be described below.

Figure 7 shows a hydraulic diagram of the gripper according to the present invention.

The entire hydraulic system is powered by a hydraulic pump and/or a hydraulic pump with variable outpress, which is part of the working machine and is not shown in the accompanying figures. Such hydraulic pumps are known in the art, so we do not describe them in more detail.

Hydraulic actuator is connected to the hydraulic pump of the working machine with the connectors AO and BO.

Rotator 2 which enables rotation of the gripper around the vertical axis is connected to the hydraulic pump of the working machine with the connectors AR and BR. The speed the rotation of rotator 2 is adjustable with a pump with a variable outpress.

As described above, two two-way hydraulic cylinders 16A, 16B are responsible for moving the arms. When the piston rod moves out of the cylinder (working stroke), the surface of the piston on which the hydraulic pressure acts is greater than the surface on which the hydraulic pressure acts upon returning of the piston rod to the cylinder (return stroke). Consequently, the force of the working stroke is also greater than the force of the return stroke. The piston divides the inside of the hydraulic cylinder into two chambers, namely the lower, pressure chamber and the chamber on the piston rod side.

In the housing of the hydraulic cylinder, in front of the pressure chamber of each hydraulic cylinder 16A, 16B, there is a controlled non-return valve 202A, 202B, which prevents unwanted leakage of hydraulic fluid from the pressure chamber after completing the working movement (gripping), thereby ensuring that the piston rod under load is not giving way. This ensures the safety and control over the gripping arm.

In closing the arms, the piston rods perform a working stroke and the pistons extrude hydraulic fluid from the chamber on the piston rod side of the hydraulic cylinder 16A, 16B into the outlet hydraulic lines, where the sequential valves 203A, 203B are installed, which ensure that the piston of the hydraulic cylinder 16A, 16B begins to move only when the pressure in the chamber on the piston rod side of the hydraulic cylinder 16A, 16B reaches the preset pressure pₐ, p_{b}, of the sequential valve 203A, 203B.

In the preferred embodiment, the preset pressure value pₐ, p_{b}, is the same.

In opening the arms, the piston rods perform a reverse stroke in which the hydraulic fluid on the way to the hydraulic cylinder chamber on the side of the piston bypasses the sequential valves 203A, 203B through the non-return valves with spring 204A, 204B, and simultaneously through the control lines x1, x2 opens the controlled non-return valves 202A, 202B which allows hydraulic fluid to escape from the cylinder pressure chamber.

The described hydraulic system allows the synchronous or asynchronous operation of the gripper according to the present invention.

This mode of operation enables that the gripper is always in the best possible contact with the object it is holding. Synchronous mode is best used for bulk, digging or moving symmetrical objects, while asynchronous mode is more suitable for use when access to the object is difficult and/or the object is asymmetric or for use when only one arm is required to move, such as the case of tree cutting shears, as will be presented below.

The hydraulic system with said hydraulic motor, or rotator 2, also enables rotation of the gripper around the vertical axis, which is best for arm movement and consequently manipulation of objects.

The bearing of rotary assembly of the device is selected to withstand high radial forces, which enables the gripper to operate also in a horizontal position without the risk of excessive bending of the arm or the construction of the working machine.

The gripper according to the present invention allows the use of different hands depending on the intended use.

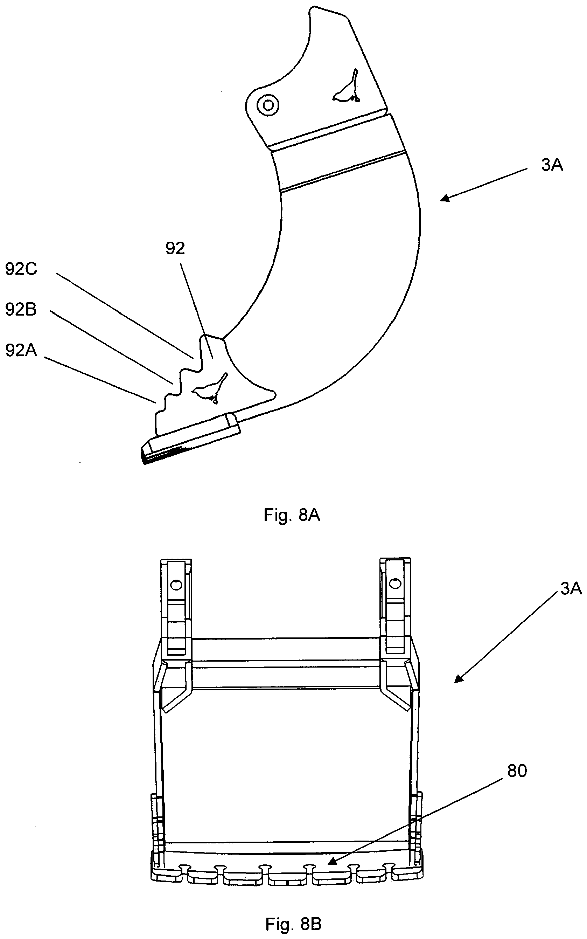

Figures 8A and 8B show the universal right gripping arm 3A, shown in Fig. 5A in a side view, which is identical to the left gripping arm 3B (Figures 1, 2).

Characteristic feature of the gripping arm 3A, 3B are the clamping handles 31.

The next feature of the gripping arm 3A, 3B is the gripping edge 80 which is convex and is by the grooves 90, which are in the rear part circularly extended, divided into segments 91, which, when in contact with the manipulated object adapt to the contact surface. Such embodiment of the gripping edge of the gripping arm 3A, 3B ensures the optimum grip of the manipulate object, and consequently, the gripping edge in this way most securely grips the manipulated object.

The next feature of the gripping arm 3A, 3B is the serrated lateral gripping edge 92, wherein the recesses between the teeth 92A, 92B, 92C are of different sizes.

Such embodiment of the lateral gripping edge 92 allows a firm grip of objects having a substantially symmetrical profile, such as, for example, wooden, metal, plastic objects. Due to the described embodiment of the gripping arm, a significantly lower gripping force is required for a secure grip compared to a gripping arm with a gripping edge without indentation.

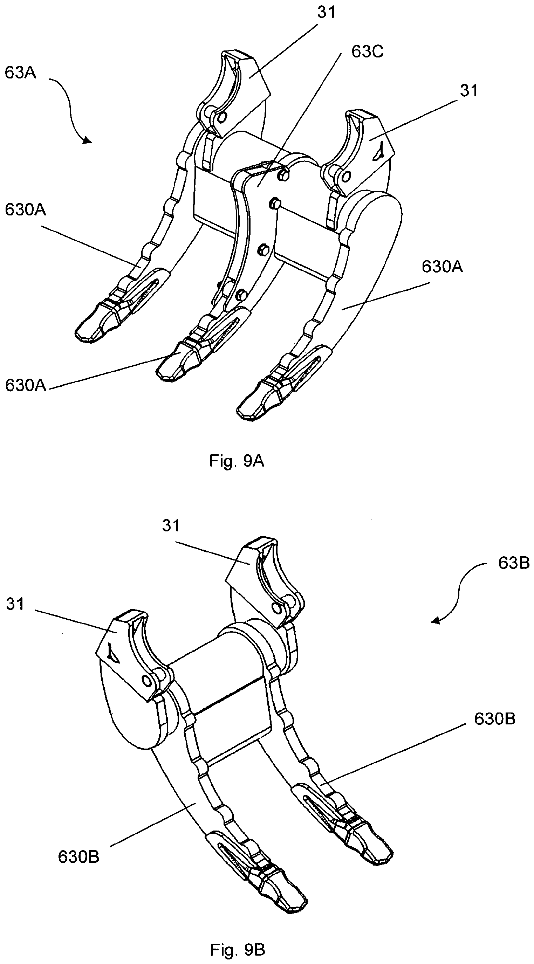

Figure 9A shows the right gripping arm 63A, and Figure 9B shows the left gripping arm 63B.

The characteristic of the gripping arms 63A, 63B is a pair of clamping handles 31 in the upper part of the said arms 63A, 63B at a distance d1 shown in Figure 5.

The next feature of the gripping arms 63A, 63B is that they are in the form of prongs where the right gripping arm 63A has three prongs 630A and the left gripping arm 63B has two prongs 630B where the arrangement of the prongs 630A, 630B on the opposite gripping arms 63A, 63B is alternating and when closing the arms, the prongs 630B of the arm 63B travel in the gap between the prongs 630A of the opposite arm 63A.

The middle prong 630A of gripping arm 63A has a buffer 630C in the upper part, which ensures better grip of the manipulated object or material.

The gripping arms 63A, 63B are suitable for manipulating rubble, rocks, branches and the like.

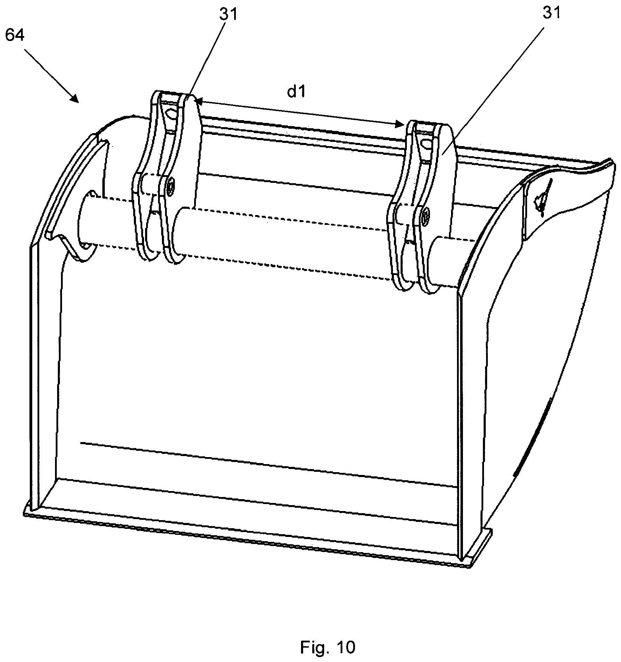

Figure 10 shows the gripping arm 64 for manipulating bulk material. The gripper is formed from two identical gripping arms 64. A feature of the gripping arm 64 is the clamping handles 31 with a distance d1 between them.

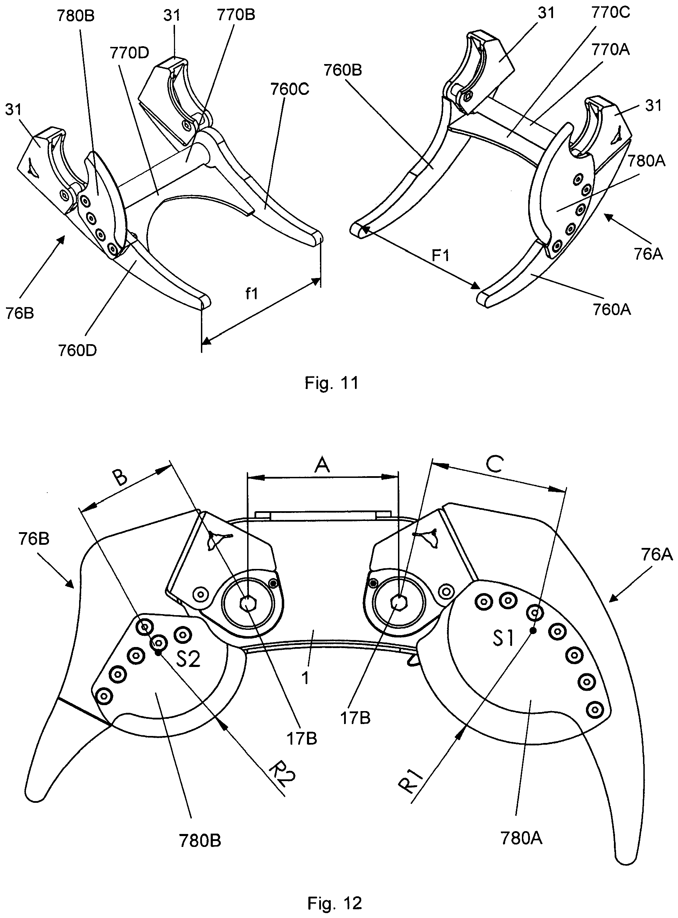

Figure 11 shows the gripping arms 76A, 76B of a scissor gripper intended primarily for use in cutting trees, branches, roots, and the like, in clearing the forest, or in pulling tree roots out of the ground, namely in asynchronous mode.

The gripping arms 76A, 76B are embodied in the form of curved ribs 760A, 760B, 760C, 760D, having in the upper part clamping handles 31, where they are connected by a crossbar 770A, 770B, reinforced with a bearing sheet metal 770C, 770D.

The gripping arms 76A and 76B have different widths, with the outer width f1 of the gripping arm 76B smaller than the distance F1 between the side ribs 760A and 760B of the gripping arm 76A, which allows that the gripping arms 76A and 76B does not collide with each other when closing.

The gripping arm 76A has a knife 780A with curved blade attached to the rib 760A, and the gripping arm 76B has a knife 780B with curved blade attached to the rib 760B where the knife 780A is larger than the knife 780B.

Each of the described gripping arms has a pair of clamping handles 31 with the same distance d1 between them shown in Figure 5A.

Figure 12 shows the gripping arms 76A, 76B attached to hydraulic actuator 1. The arm 76A has attached a blade in the shape of an arch 780A with radius R1; the arm 76B has attached a blade 780B in the form of an arch with radius R2. The center of radius R1 is at point S1 and the center of radius R2 is at point S2. During closing - opening, the arms 76A, 76B rotate around the axis of the projections 17B of the shaft 17.

As mentioned above, hydraulic actuator 1 can be embodied in different sizes, depending on the working machine that will use it, where the size of hydraulic actuator 1 is determined by the distance A between said axes of projection 17B of the shaft 17.

In the construction of shears, depending on the size of the hydraulic actuator, we start from the mentioned distance A, and determine the other distances R1, R2, B and C as follows:
R1 = from 0.69·A to 0.85 A;
R2 = from 0.53·A to 0.65·A;
B = from 0.81·A to 0.99-A;
C = from 0.61·A to 0.75 · A.

In a preferred embodiment, the distances R1, R2, B and C are as follows:
R1 = 0.773·A;
R2 = 0.59·A;
B = 0.903·A;
C = 0.68·A.

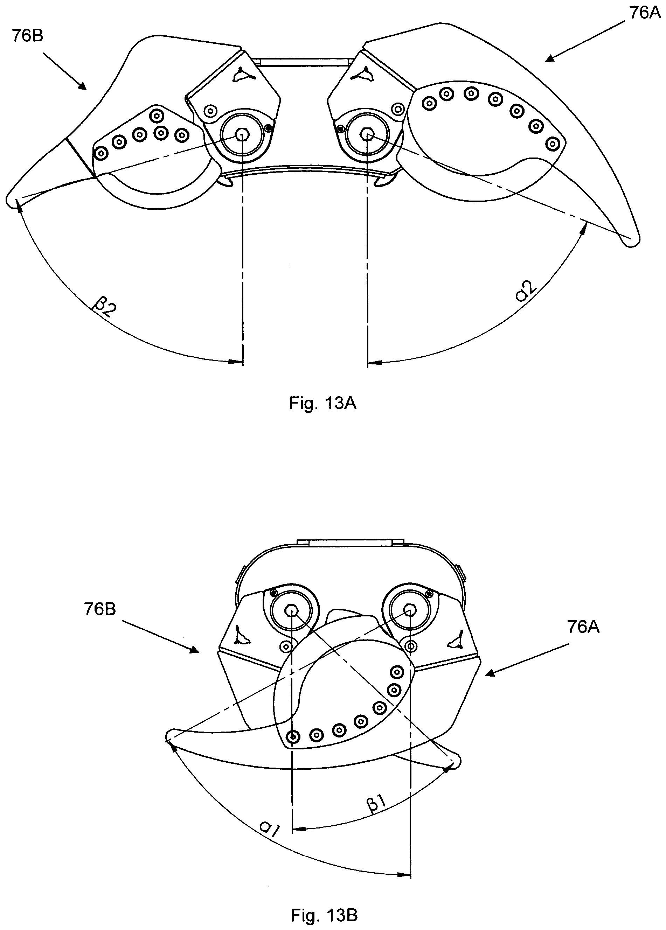

Figures 13A and 13B show the gripping arms 76A, 76B attached to the hydraulic actuator 1, namely in the fully open position (Figure 13A) and in the fully closed position (Figure 13B).

As can be seen from Figures 13A and 13B, the gripping arm 76B circumscribes from a fully open position to a fully closed position an angle of β1 + β2 and the gripping arm 76A circumscribes from a fully open position to a fully closed position an angle of α1 + α2.

The angle β1 + β2 ranges from 110° do 120°, in the preferred embodiment it is 116°. The angle α1 + α2 ranges from 100° do 110°, in the preferred embodiment it is 104°.

The present invention is described and illustrated in the accompanying figures by means of specific embodiment cases. It will be appreciated that many variations are possible without departing from the scope of the invention as defined by the attached claims.

## Claims

1. A multi-purpose hydraulic gripper comprising a hydraulic actuator (1), a rotator (2), an adjustment plate (3) and a bearing (4) **characterized by**:
- a pair of gripping arms (3A, 3B, 63A, 63B) or two arms (64, 64; 76A, 76B) which are clamped to the hydraulic actuator (1);
- the hydraulic actuator (1) consisting of two identical hydraulic cylinders (16A, 16B) which are housed in a box housing (11) which is closed at the bottom by a housing cover (12) and which has curved side walls comprising lubrication openings (11A, 11A), each lubrication opening being closed by a plug (11B, 11B);
- a control part of the hydraulic actuator being housed in the said box housing (11) allowing synchronous and/or asynchronous operation of the hydraulic actuator(1);
- the hydraulic actuator (1) being connectable to a hydraulic pump;
- on the upper side of the housing (11) there being a connection plate (14) of the box housing (11) having a central through opening (14A) with a multitude of circularly arranged mounting holes;
- the box housing (11) comprising front and rear walls (13A, 31B), each comprising two openings (15A, 15B; 105A, 105B), wherein the openings are coaxial by pairs;
- two identical hydraulic cylinders (16A, 16B) being located in the box housing (11), and being arranged in parallel and facing in opposite directions, wherein each hydraulic cylinder (16A, 16B) is fixed on one side to the box housing (11) and on the other side onto a crank (17A) of a corresponding crankshaft (17);
- the shafts (17, 17) being parallel to each other and being pivoted in the front (13A) and rear (13B) walls of the box housing (11) in said axial openings (15A, 105A; 15B, 105B);
- wherein in the assembled state of the gripper, two projections (17B, 17B) of the crankshafts (17,17) protrude from the front and back of the box housing (11), each of the two projections (17B, 17B), comprising semicircular grooves (17C) and a threaded aperture (17D) in the front face of each projection (17B, 17B); - wherein on each projection (17B, 17B) of each crankshaft (17,17) there is mounted a corresponding clamping crank (19A, 19B) which has on the side facing the box housing (11) a sleeve (19C) with an opening which has around the circumference the semicircular grooves (19D) corresponding by shape and arrangement to the grooves (17C) on each of the projections (17B, 17B) and on the side facing away from the box housing (11) each clamping crank (19A, 19B) is shaped as irregular flange (109A, 109B) with a thickness e1, having an opening (19G, 19H) at the circumference for fixing a gripping arm and at the bottom a clamping groove (110A, 110B) for holding a bolt (32) of a handle (31) of the gripping arm;
- wherein said clamping cranks (19A, 19B) are mirror-inverted to one another and a radial transmission of force between the clamping crank (19A, 19B) and the projection (17B, 17B) of each crankshaft (17,17) is provided by conical pins (21) inserted into openings which are formed by semicircular grooves (17C) of the projections (17B, 17B) and semicircular grooves (19D, 19D) of the openings of the sleeves (19C, 19C), wherein the falling out of conical pins (21) is prevented by an elastic washer (22) and a cover (23) fixed by a screw (24) screwed in a threaded aperture (17D) of each projection (17B, 17B).

2. The multi-purpose hydraulic gripper according to claim 1, **characterized in that** the control part of the hydraulic actuator is configured to operate in accordance with a hydraulic scheme and **in that** said hydraulic pump is a variable outpress hydraulic pump and **in that** the variable outpress pump is a part of a working machine.

3. The multi-purpose hydraulic gripper according to claim 2, **characterized in that**:
- a controlled non-return valve (202A, 202B) is located in the box housing (11) of the hydraulic cylinders (16A, 16B) in front of the pressure chamber of each hydraulic cylinder (16A, 16B);
- a sequential valve (203A, 203B) is located in the outlet hydraulic line on the piston rod side of each hydraulic cylinder (16A, 16B);
- wherein the piston of each hydraulic cylinder (16A, 16B) begins to move only when the pressure in the chamber on the side of the piston rod of each hydraulic cylinder (16A, 16B) reaches a preset pressure pa, pb, wherein the preset values of pressure pa, pb are preferably equal.

4. The multi-purpose hydraulic gripper according to claim 1 **characterized by**, a pair of clamping handles (31) in the upper part of each gripping arm (3A, 3B) and spaced at a distance of d which is greater than the distance dl between the outer surfaces of the front and rear walls (13A, 13B) of the housing (11), wherein each clamping handle (31) has a clamping cavity (301) with a width e that is at the sides bounded by parallel side walls (301A, 301B) and at the back by a rear wall (301C) with a threaded opening (33) at the top and at the lower part obliquely slopes into a bottom (301D) of the clamping cavity (301), wherein a transverse clamping bolt (32) is mounted between the side walls (301A, 301B) and wherein the width of the clamping cavity e is greater than the thickness el of each of the irregularly-shaped flanges (109A, 109B).

5. The multi-purpose hydraulic gripper according to claim 3, **characterized in that**:
- the gripping arms (3A, 3B) have a convex gripping edge (80) which is divided by grooves (90) into segments (91) which, when in contact with an object to be manipulated, are adapted to the contact surface;
- each gripping arm (3A, 3B) comprises a serrated lateral gripping edge (92) with teeth (92A, 92B, 92C), wherein recesses between the teeth (92A, 92B, 92C) are of different sizes.

6. The multi-purpose hydraulic gripper according to claim 1, **characterized in that** the gripping arms (63A, 63B) are formed as prongs, wherein a first gripping arm (63A) has three prongs (630A) and a second gripping arm (63B) has two prongs (630B), wherein the arrangement of the prongs (630A, 630B) on the opposite gripping arms (63A, 63B) is alternating and when closing the arms, the prongs (630B) of the second gripping arm (63B) travel in the gap between the prongs (630A) of the opposite first gripping arm (63A), the first and second gripping arms (63A, 63B) having at their upper parts a pair of clamping handles (31) spaced by a distance dl.

7. The multi-purpose hydraulic gripper according to claim 1, **characterized in that** each of first and second gripping arms (76A, 76B) is shaped as curved ribs (760A, 760B; 760C, 760D), with a connecting crossbar (770A, 770B) and having at an upper part a pair of clamping handles (31) spaced at a distance dl;
- wherein each gripping arm (76A, 76B) has a different width, wherein the outer width fl of the second gripping arm (76B) is less than the distance Fl between side ribs (760A, 760B) of the first gripping arm (76A);
- the first gripping arm (76A) has a knife (780A) attached to a rib (760A) with an arc-shaped blade with radius R1 and a centre at a point S1 located at a distance C from the axis of the projection (17B) closest to the crankshaft (17);
- the second gripping arm (76B) having a knife (780B) attached to the rib (760B) with an arc-shaped blade with radius R2 and a centre at a point S2 located at a distance B from the axis of the projection (17B) closest to the crankshaft (17).

8. The multi-purpose hydraulic gripper according to any one of claims 1 to 3, **characterized in that** the hydraulic actuator (1) can be made in different sizes, where the size of the hydraulic actuator is determined by a distance A between the axes of the projections (17B, 17B) of the crankshafts (17) (17, 17).

9. The multi-purpose hydraulic gripper according to claim 8, **characterized in that** depending on the size of the hydraulic actuator (1), determined by the distance A between the axes of the projections (17B, 17B) of the shafts (17, 17) the size of the radii R1 and R2 of the arch-shaped blades of the gripping arms (76A, 76B) and the distances C and B between the projections (17B, 17B) and the centres of rotation of the gripping arms (76A, 76B) are determined using the following equations:
R1 = from 0.69.A to 0.85.A, preferably R1 = 0.773.A
R2 = from 0.53.A to 0.65.A, preferably R2 = 0.59.A
B = from 0.81.A to 0.99.A, preferably B = 0.903.A
C = from 0.61.A to 0.75.A, preferably C = 0.68.A

10. The multi-purpose hydraulic gripper according to claim 7 or 9, **characterized in that** the second gripping arm (76B) circumscribes from a fully open position to a fully closed position an angle β1 + β2 and **in that** the first gripping arm (76A) from a fully open position to a fully closed position circumscribes an angle a1 + a2, wherein:
β1 + β2 = from 110° to 120°, preferably β1 + β2 = 116°;
a1 + a2 = from 100° to 110°, preferably a1 + a2 = 104°.

## Patentansprüche

1. Hydraulischer Mehrzweckgreifer, der einen hydraulischen Aktuator (1), einen Rotator (2), eine Einstellplatte (3) und ein Lager (4) enthält, der **gekennzeichnet ist durch**:
- ein Paar Greifarme (3A, 3B, 63A, 63B) oder zwei Arme (64, 64, 76A, 76B), die an dem hydraulischen Aktuator (1) angebracht sind;
- einen hydraulischen Antrieb (1), der aus zwei identischen Hydraulikzylindern (16A, 16B) besteht, die sich in einem kastenartigen Gehäuse (11) befinden, das unten **durch** einen Gehäusedeckel (12) abgeschlossen ist und in dem sich gebogene Seitenwände befinden, in denen es Schmieröffnungen (11A, 11A) gibt, jede Schmieröffnung ist mit einem Stopfen (1 1B, 11B) verschlossen;
- das im vorgenannten Gehäuse (11) angeordnete Steuerteil des hydraulischen Antriebs, das einen synchronen und/oder asynchronen Betrieb des hydraulischen Aktuators (1) ermöglicht;
- den hydraulischen Aktuator (1), der mit der hydraulischen Pumpe verbunden werden kann;
- eine auf der Oberseite des Gehäuses (11) angeordnete Gehäuseverbindungsplatte (14) mit einer zentralen Durchgangsöffnung (14A) mit mehreren kreisförmig angeordneten Befestigungslöchern;
- ein kastenartiges Gehäuse (11), mit einer Vorder- und einer Hinterwand (13A, 31B), die jeweils zwei Öffnungen (15A, 15B und 105A, 105B) enthält, wobei das Öffnungspaar koaxial ist;
- zwei identische Hydraulikzylinder (16A, 16B), die sich in einem kastenartigen Gehäuse (11) befinden und parallel und in entgegengesetzte Richtung weisend angeordnet sind, wobei jeder Hydraulikzylinder (16A, 16B) auf einer Seite in ein kastenartiges Gehäuse (11) und die andere Seite in den Hebel (17A) auf der entsprechenden Kurbelwelle (17) eingespannt ist;
- Wellen (17, 17), die parallel zueinander sind und sich in der vorderen (13A) und in der hinteren (13B) Wand des kastenartigen Gehäuses (11) befinden, in den vorgenannten koaxialen Öffnungen (15A, 105A; 15B, 105B);
- wobei im zusammengebauten Zustand aus den Greifern von der Vorder- und von der Hinterseite des kastenförmigen Gehäuses (11) zwei Vorsprünge (17B, 17B) der Kurbelwellen (17, 17) hervorragen, wobei jeder der zwei Vorsprünge (17B, 17B) halbkreisförmige Nuten (17C) hat und in der Vorderfläche jedes Vorsprungs (17B, 17B) eine Gewindeöffnung (17D);
- wobei auf jedem Vorsprung (17B, 17B) jeder Kurbelwelle (17, 17) ein entsprechender Spannhebel (19A, 19B) aufgesetzt ist, der auf der dem kastenartigen Gehäuse (11) zugewandten Seite eine Buchse (19C) mit einer Öffnung aufweist, die auf dem Umfang halbkreisförmige Nuten (19D), die in Form und Anordnung den Nuten (17C) auf jedem Vorsprung entsprechen (17B, 17B) aufweist und auf der dem kastenartigen Gehäuse (11) abgewandten Seite einen Klemmhebel (19A, 19B) aufweist, der Form eines unregelmäßigen Flansches (109A, 109B) mit einer Dicke e1, der auf dem Umfang eine Öffnung (19G, 19H) zum Befestigen des Greifarms und eine Klemmnut (1 10A, 110B) im unteren Teil zum Befestigen des Bolzens (32) der Öse (31) des Greifarms aufweist;
- wobei die Spannhebel (19A, 19B) spiegelbildlich zueinander sind und die radiale Kraftübertragung zwischen dem Spannhebel (19A, 19B) und dem Vorsprung (17B, 17B) jeder Kurbelwelle (17, 17) **durch** Konusstifte gewährleistet ist (21), die in die Öffnungen eingeführt werden, die **durch** die halbkreisförmigen Nuten (17C) der Vorsprünge (17B, 17B) und die halbkreisförmigen Nuten (19D, 19D) der Buchsenöffnungen (19C) gebildet werden, wodurch das Herausfallen der Konusstifte (21) **durch** eine elastische Unterlegscheibe (22) und eine Abdeckung (23), die mit einer Schraube (24) befestigt sind, die in die Gewindeöffnung (17D) jedes Vorsprungs (17B, 17B) geschraubt wird, verhindert wird.

2. Hydraulischer Mehrzweckgreifer nach Anspruch 1, **dadurch gekennzeichnet, dass** der Steuerteil des hydraulischen Antriebs so konfiguriert ist, dass es gemäß dem Hydraulikschema arbeitet, und dass die Hydraulikpumpe eine Hydraulikpumpe mit variabler Verdrängung ist und dass die Pumpe mit variabler Verdrängung ein Teil der Arbeitsmaschine ist.

3. Hydraulischer Mehrzweckgreifer nach Anspruch 2, **dadurch gekennzeichnet, dass**:
- sich das gesteuerte Rückschlagventil (202A, 202B) im kastenartigen Gehäuse (11) der Hydraulikzylinder (16A, 16B) vor der Druckkammer jedes Hydraulikzylinders (16A, 16B) befindet;
- das Zuschaltventil (203A, 203B) in der Ausgangshydraulikleitung auf der Kolbenseite jedes Hydraulikzylinders (16A, 16B) angeordnet ist;
- sich der Kolben jedes Hydraulikzylinders (16A, 16B) zu bewegen beginnt, wenn der Druck in der Kammer auf der Kolbenseite jedes Hydraulikzylinders (16A, 16B) den voreingestellten Druck pₐ, p_{b} erreicht, wobei die Werte der voreingestellten Drücke pₐ, p_{b} , vorrangig gleich sind.

4. Hydraulischer Mehrzweckgreifer nach Anspruch 1, **gekennzeichnet durch** ein Paar Klemmösen (31) im oberen Teil jedes Greifarms (3A, 3B) in einem gegenseitigen Abstand d, der größer ist als der Abstand d1 zwischen den Außenflächen der Vorder- und Rückwand (13A, 13B) des Gehäuses (11), wobei jede Klemmöse (31) einen Klemmhohlraum (301) mit einer Breite e aufweist, der seitlich von parallelen Seitenwänden (301A, 301B) und hinten **durch** eine Rückwand (301C) mit einer Gewindeöffnung (33), die im oberen und im unteren Teil schräg in den Boden (301D) des Klemmhohlraums (301) übergeht, wo ein Querklemmbolzen (32) zwischen den Seitenwänden (301A, 301B) montiert ist und wo die Breite des Klemmhohlraums e größer ist als die Dicke e1 der Flanschen (109A, 109B) mit einer unregelmäßigen Form.

5. Hydraulischer Mehrzweckgreifer nach Anspruch 3, **dadurch gekennzeichnet, dass**:
- die Greifarme (3A, 3B) eine konvexe Greifkante (80) aufweisen, die durch Nuten (90) in Segmente (91) unterteilt ist, die sich bei Kontakt mit dem Handhabungsobjekt der Kontaktfläche anpassen, und
- jeder Greifarm (3A, 3B) eine gezahnte seitliche Greifkante (92) mit Zähnen (92A, 92B, 92C) aufweist, wobei die Aussparungen zwischen den Zähnen (92A, 92B, 92C) unterschiedlich groß sind.

6. Hydraulischer Mehrzweckgreifer nach Anspruch 1, **dadurch gekennzeichnet, dass** die Greifarme (63A, 63B) in Form von Zacken hergestellt sind, wobei der erste Greifarm (63A) drei Zacken (630A) und der zweite Greifarm (63A) ( 63B) zwei Zacken (630B) aufweist, wobei die Anordnung der Zacken (630A, 630B) an den gegenüberliegenden Greifarmen (63A, 63B) vorübergehend ist und wenn die Zackenarme (630B) geschlossen sind, bewegen sich die anderen Greifarme (63B) im Spalt zwischen den Zacken (630A) der gegenüberliegenden Greifarme (63A), wobei der erste und der zweite Greifarm (63A, 63B) im oberen Teil ein Paar Klemmösen (31) im gegenseitigen Abstand d1 aufweisen.

7. Hydraulischer Mehrzweckgreifer nach Anspruch 1, **dadurch gekennzeichnet, dass** jeder der ersten und zweiten Greifarme (76A, 76B) die Form gebogener Rippen (760A, 760B; 760C, 760D) mit einer Verbindungsstange (770, 77B) aufweist und im oberen Teil ein Paar Klemmösen (31) im gegenseitigen Abstand d1;
- wobei jeder Greifarm (76A, 76B) eine unterschiedliche Breite besitzt, wobei die äußere Breite f1 des zweiten Greifarms (76B) kleiner ist als der Abstand F1 zwischen den Seitenrippen (760A und 760B) des ersten Greifarms (76A);
- der Greifarm (76A) hat ein an der Rippe (760A) befestigtes Messer (780A), das mit einer bogenförmigen Schneide mit Radius R2 und im Mittelpunkt S2 befestigt ist, der sich im Abstand C von der Achse des Vorsprungs (17B), die der Welle (17) am nächsten liegt, befindet.
- der Greifarm (76B) hat ein an der Rippe (760B) befestigtes Messer (780B) mit einer bogenförmigen Schneide mit einem Radius R1 und mit Mittelpunkt in Punkt S1, der sich im Abstand B von der Achse des Vorsprungs (17B), die der Welle (17) am nächsten liegt, befindet.

8. Hydraulischer Mehrzweckgreifer nach einem der Ansprüche 1 bis 3, **dadurch gekennzeichnet, dass** der hydraulische Aktuator (1) in verschiedenen Größen herstellbar ist, wobei die Größe des hydraulischen Antriebs durch den Achsabstand (A) zwischen den Vorsprüngen (17B, 17B) der Wellen (17, 17) festgelegt ist.

9. Hydraulischer Mehrzweckgreifer nach Anspruch 8, **dadurch gekennzeichnet, dass** er in Abhängigkeit von der Größe des hydraulischen Aktuators (1) ist, der durch den Abstand A zwischen den Achsen der Vorsprünge (17B, 17B) der Kurbelwellen (17, 17), die Größen der Radien R1 und R2 der Schneiden in Form des Bogens der Greifarme (76A, 76B) und der Abstände C und B zwischen den Vorsprüngen (17B, 17B) und den Drehmittelpunkten der Greifarme ( 76A, 76B), bestimmt unter Verwendung der folgenden Gleichungen, bestimmt ist:
R1 = von 0,69·A bis 0,85 A, vorrangig R1 = 0,773·A;
R2 = von 0,53 A bis 0,65·A, vorrangig R2 = 0,59·A;
B = von 0,81·A do 0,99·A, vorrangig B = 0,903·A;
C = von 0,61·A bis 0,75 A, vorrangig C = 0,68 A.

10. Hydraulischer Mehrzweckgreifer nach Anspruch 7 oder 9, **dadurch gekennzeichnet, dass** der zweite Greifarm (76B) einen Winkel von einer vollständig geöffneten Position zu einer vollständig geschlossenen Position beschreibt als β 1 +β 2 und dass der erste Greifarm (76A) einen Winkel von der vollständig geöffneten Position zu der vollständig geschlossenen Position beschreibt α 1 +α 2, wobei Folgendes gilt:
β1 +β2 = von 110° bis 120°, vorrangig β1 +β2 = 116°; und
α1 +α2 = von 100° bis 110°, vorrangig α1 +α2 = 104°.

## Revendications

1. Pince hydraulique polyvalente comprenant un actionneur (1), un rotateur (2), une plaque de réglage (3) et un roulement (4), **caractérisée par**:
- une paire de bras de préhension 3A, 3B, 63A, 63B) ou deux bras (64, 64, 76A, 76B) attachés à l'actionneur hydraulique (1);
- l'entraînement hydraulique (1), composé de deux cylindres hydrauliques identiques (16A, 16B) disposés dans un boîtier carré (11) fermé au fond par un couvercle de boîtier (12) et avec des parois latérales courbes dans lesquelles il y a deux trous de lubrification (11A, 11A), chacun d'eux est fermé par un bouchon (11B, 11B);
- la partie commande de l'entraînement hydraulique située dans le boîtier précité (11), permettant un fonctionnement synchrone et/ou asynchrone de l'actionneur hydraulique (1);
- l'actionneur hydraulique (1) fiable à une pompe hydraulique;
- une plaque de connexion du boîtier (14), située au côté supérieur du boîtier (11), ayant une ouverture centrale (14A) avec une pluralité de trous de fixation disposés circulairement;
- le boîtier carré (11) avec une paroi avant et une paroi arrière (13A, 31B), chacune de celles-ci contenant deux ouvertures (15A, 15B et 105A, 105B) et chacune paire d'ouvertures étant coaxiale;
- deux cylindres hydrauliques identiques (16A, 16B) situés dans le boîtier carré (11) posés parallèlement et orientés dans la direction opposée, chaque cylindre hydraulique (16A, 16B) est serré dans le boîtier carré (11) d'un côté et dans le levier (17A) sur le vilebrequin correspondant (17) de l'autre;
- les arbres (17, 17), parallèles et logés par le palier dans les parois avant (13A) et arrière (13B) du boîtier carré (11), dans les ouvertures coaxiales susmentionnées (15A 105A, 15B, 105B);
- où, à l'état assemblé de prince, deux protubérances (17B, 17B) des vilebrequins (17, 17) sortent de l'avant et de l'arrière du boîtier carré (11), sur chacune des deux protubérances (17B, 17B) il y a des rainures semi-circulaires (17C) et dans la surface avant de chaque protubérance (17B, 17B) une ouverture filetée (17D);
- où, sur chaque protubérance (17B, 17B) de chaque vilebrequin (17, 17) il y a un levier de serrage correspondant (19A, 19B) comportant, sur le côté faisant face au boîtier carré (11), une douille (19C) ayant une ouverture avec des rainures semi-circulaires (19D) sur la circonférence qui, selon leur forme et disposition correspondent aux rainures (17C) sur chaque protubérance (17B, 17B) et, sur le côté opposé au boîtier carré (11) le levier de serrage (19A, 19B) a la forme d'une bride irrégulière (109A, 109B) d'épaisseur égale à e1, présentant, en périphérie, une ouverture (19G, 19H) pour la fixation du bras de préhension et, dans la partie inférieure, une rainure de serrage (110A, 1 10B) pour serrer le boulon (32) de l'oeil (31) du bras de préhension;
- où les deux leviers de serrage mentionnés (19A, 19B) sont inversés et la transmission radiale de l'effort entre le levier de serrage (19A, 19B) et la protubérance (17B, 17B) de chaque vilebrequin (17, 17) est assurée à l'aide des chevilles coniques (21) insérées dans les ouvertures formées par les rainures semi-circulaires (17C) des protubérances (17B, 17B) et les rainures semi-circulaires des ouvertures des douilles (19C), où une rondelle élastique (22) et un couvercle (23), qui sont fixés avec une vis (24) vissée dans l'ouverture filetée (17D) de chaque protubérance (17B, 17B) empêchent la chute des chevilles coniques (21).

2. La pince hydraulique polyvalente selon la revendication 1, **caractérisée en ce que** la partie commande de l'entraînement hydraulique est configurée pour fonctionner conformément au schéma hydraulique et que ladite pompe hydraulique est une pompe hydraulique à cylindrée variable et que la pompe à cylindrée variable est une partie de la machine de travail.

3. La pince hydraulique polyvalente selon la revendication 2. **caractérisée en ce que**:
- le clapet anti-retour commandé (202A, 202B) est logé dans le boîtier carré (11) des cylindres hydrauliques (16A, 16B) devant la chambre de pression de chaque cylindre hydraulique (16A, 16B);
- la vanne de séquence (203A, 203B) est située dans la conduite hydraulique de sortie du côté tige de piston de chaque cylindre hydraulique (16A, 16B);
- où le piston de chaque cylindre hydraulique (16A, 16B) ne commence à mouvoir que lorsque la pression dans la chambre du côté de la tige de piston de chaque cylindre hydraulique (16A, 16B) atteint la pression préréglée pₐ, p_{b}, où les valeurs des pressions préréglées pₐ, p_{b} sont de préférence égales.

4. La pince hydraulique polyvalente selon la revendication 1, **caractérisée par** une paire d'oreilles de serrage (31) dans la partie supérieure de chaque bras de préhension (3A, 3B) à une distance mutuelle d supérieure à la distance d1 entre les surfaces extérieures des parois avant et arrière (13A, 13B) du boîtier (11), où chaque oreille de serrage (31) comporte une cavité de serrage (301) de la largeur e délimitée sur les côtés par les parois latérales parallèles (301a, 301B) et à l'arrière par une paroi arrière (301C) à ouverture filetée (33) dans la partie supérieure et dans la partie inférieure s'incline dans le fond (301D) de la cavité de serrage (301), où un boulon de serrage transversal (32) est installé entre les parois latérales (301A, 301B) et, où la largeur de la cavité e est supérieure à l'épaisseur e1 des brides (109a, 109B) de forme irrégulière.

5. La pince hydraulique polyvalente selon la revendication 3, **caractérisée en ce que**:
- les deux bras de préhension (3A, 3B) présentent un bord de préhension convexe (80) divisé par des rainures (90) en segments (91) qui, lors de contact avec l'objet manipulé, s'adaptent à la surface de contact, et
- chaque bras de préhension (3A, 3B) comprend un bord de préhension latéral dentelé (92) avec des dents (92A, 92B, 92C), où les espaces entre les dents (92A, 92B, 92C) sont de tailles différentes.

6. La pince hydraulique polyvalente selon la revendication 1, **caractérisée en ce que** les deux bras de préhension (63A, 63B) sont réalisés sous forme de griffes, où le premier bras de préhension (63A) comporte trois griffes (630A) et le deuxième bras de préhension (63B) deux griffes (630B), où la disposition des griffes (630A, 630B) sur les bras de préhension opposés (63A, 63B) est parallèle et lors de la fermeture des bras les griffes (630B) du deuxième bras de préhension (63B) se déplacent dans l'espace entre les griffes (630A) du bras de préhension opposé (630B), où le premier et le second bras de préhension (63A, 63B) comportent dans la partie supérieure une paire d'oreilles de serrage (31) à une distance mutuelle d1.

7. La pince hydraulique polyvalente selon la revendication 1, **caractérisée en ce que** chacun de deux bras de préhension (76A, 76B) est d'une forme de nervures courbes (760A, 760B; 760C, 760D) avec une barre de liaison (770, 77B) et comportent une paire d'oreilles de serrage (31) à la distance mutuelle d1 dans la partie supérieure;
- où chaque bras de préhension (76A, 76B) est d'une largeur différente, où la largeur extérieure fl du deuxième bras de préhension (76B) est inférieure à la distance F1 entre les nervures latérales (760A et 760B) du premier bras de préhension (76A);
- le bras de préhension (76A) comporte un couteau (780A) fixé sur la nervure (760A) avec une lame en forme d'un arc de rayon R1 et centrée au point S1, se trouvant à la distance C par rapport à l'arbre (17) le plus proche à l'axe de protubérance (17B);
- le bras de préhension (76B) comporte un couteau (780B) fixé à la nervure (760B) avec une lame en forme d'un arc de rayon R2 et centrée au point S2 se trouvant à la distance B par rapport à l'arbre le plus proche (17) à l'axe de protubérance (17B).

8. La pince hydraulique polyvalente selon l'une quelconque des revendications 1 à 3, **caractérisée en ce que** l'actionneur hydraulique (1) peut être fabriqué en différentes tailles, la taille de l'entraînement hydraulique étant déterminée par la distance (A) entre les axes des protubérances (17B, 17B) de l'arbre (17, 17).

9. La pince hydraulique polyvalente selon la revendication 8, **caractérisée par le fait, qu'** en dépendance de la taille de l'actionneur hydraulique (1) déterminée par la distance A entre les axes des protubérances (17B, 17B) des vilebrequins (17, 17), les dimensions des rayons R1 et R2 des lames en forme d'arc des bras de préhension (76A, 76B) et les distances C et B entre les protubérances (17B, 17B) et les centres de rotation des bras de préhension (76A, 76B) sont déterminés à l'aide des équations suivantes:
R1 = de 0,69·A à 0,85·A, de préférence R1= 0,773·A;
R2 = de 0,53·A à 0,65·A, de préférence R2 = 0,59·A;
B = de 0,81·A à 0,99·A, de préférence B = 0,903·A;
C = de 0,61·A à 0,75 A, de préférence C = 0,68 A.

10. La pince hydraulique polyvalente selon la revendication 7 ou 9, **caractérisée en ce que** le deuxième bras de préhension (76B) de la position entièrement ouverte jusqu'à la position entièrement fermée décrit l'angle β1 + β2 et le premier bras de préhension (76A) de la position entièrement ouverte jusqu'à la position entièrement fermée décrit l'angle α1 + α2, où :
β1 + β2 = de 110° à 120°, de préférence β1 + β2 = 116°; in
α1 + α2 = de 100° à 110°, de préférence α1 + α2 = 104°.
